# EUROPEAN PATENT APPLICATION

(11) **EP 1 637 777 A2**
(43) Date of publication of application: **22.03.2006**
(21) Application number: 05255797.2
(22) Date of filing: 20.09.2005
(51) Int. Cl.: F16H 57/04

(54) **Baffle plate**

(30) Priority: 21.09.2004 JP 2004273079
(71) Applicant: JATCO Ltd, Fuji-shi, Shizuoka 417-8585 (JP)
(72) Inventor: Tominaga, Masakazu, Shizuoka, 417-8585 (JP); Taguchi, Hiromi, Shizuoka, 417-8585 (JP); Kunii, Yasuhiko, Shizuoka, 417-8585 (JP)
(74) Representative: Whitlock, Holly Elizabeth Ann

(57) **Abstract**

There is provided a baffle plate (60) which conforms to the shape of the inner peripheral surface of a transmission case (50) and can be easily brought into contact with the inner peripheral surface of the transmission case (50), making it easier to design and manufacture the baffle plate (60). Rubber plates (76,86,88) are arranged on a side of the baffle plate (60) in proximity to the bottom wall (51) of the transmission case. The baffle plate (66) encloses both sides of the rotating surface of the driven sprocket (12). Therefore, even if the inner peripheral surface of the bottom wall (51) of the transmission case (50) has a complex shape, the side of the baffle plate (66) in proximity to the case bottom wall (51) can be closely attached to the inner peripheral surface of the transmission case (50). And, the baffle plate (66) can be easily designed and manufactured. Also, oil agitating resistance during rotation of the driven sprocket (12) can be reduced.

## Description

### BACKGROUND OF THE INVENTION

### Field of the Invention

The present invention relates to a baffle plate which encloses rotating bodies in an automatic transmission.

### Description of the Prior Art

Conventionally, there has been known a plate which encloses rotating bodies such as a final gear in an automatic transmission (hereinafter referred to as "baffle plate"). The baffle plate prevents oil from flowing to the rotating bodies when the rotating bodies are rotating at high speed. As a result, the amount of oil agitated by the rotating bodies is decreased to reduce friction.

Also, there has been known a baffle plate in which an opening is formed in part of the baffle plate and brought into contact with the inner peripheral surface of a transmission case to use the transmission case as part of the baffle plate so that the baffle plate can be compact.

In this case, the opening of the baffle plate is formed to conform to the shape of the inner peripheral surface of the transmission case so that the baffle plate can be brought into contact with the inner peripheral surface of the transmission case.

The construction of this baffle plate is described in Japanese Laid-Open Patent Publication (Kokai) No. H11-98616.

However, in the case where the inner peripheral surface of the transmission case has a complex shape, it is very difficult to design and manufacture the baffle plate because the opening of the baffle plate must conform to the complex shape.

### SUMMARY OF THE INVENTION

It is therefore an object of the present invention to provide a baffle plate which conforms to the shape of the inner peripheral surface of a transmission case and can be easily brought into contact with the inner peripheral surface of the transmission case, making it easier to design and manufacture the baffle plate.

To attain the above object, there is provided a baffle plate that encloses at least part of a rotating body in an automatic transmission, including a plate main body partially in proximity to the inner wall of a transmission case of the automatic transmission, and a sealing member that is provided at a part of the plate main body in proximity to the inner wall of the transmission case and comprised an elastically or plastically deformable member, wherein the sealing member can be closely attached to the inner wall of the transmission case.

According to the present invention, the baffle plate is closely attached to the inner peripheral surface of the transmission case via the sealing member, and hence even in the case where the inner peripheral surface of the transmission case has a complex shape, the baffle plate can be closely attached to the inner peripheral surface of the transmission case. Therefore, the baffle plate can be easily designed and manufactured.

Other features and advantages of the present invention will apparent from the following detailed description taken in conjunction with the accompanying drawings, in which like reference characters designate the same or similar parts throughout the figures thereof.

### BRIEF DESCRIPTION OF THE DRAWINGS

The accompanying drawings, which are incorporated in and constitute a part of the specification, illustrate embodiments of the invention and, together with the description, serve to explain the principles of the invention.
FIG. 1 is a front view showing a baffle plate according to an embodiment of the present invention;
FIG. 2a is a front view showing a baffle plate base;
FIG. 2b is a bottom view showing the baffle plate base;
FIG. 3a is a front view showing a baffle plate cover;
FIG. 3b is a bottom view showing the baffle plate cover;
FIG. 4 is a view showing a rubber plate; and
FIG. 5 is a diagram schematically showing the arrangement of the baffle plate.

### DETAILED DESCRIPTION OF THE PREFERRED EMBODIMENTS

The present invention will now be described in detail with reference to the accompanying drawings showing a preferred embodiment thereof.

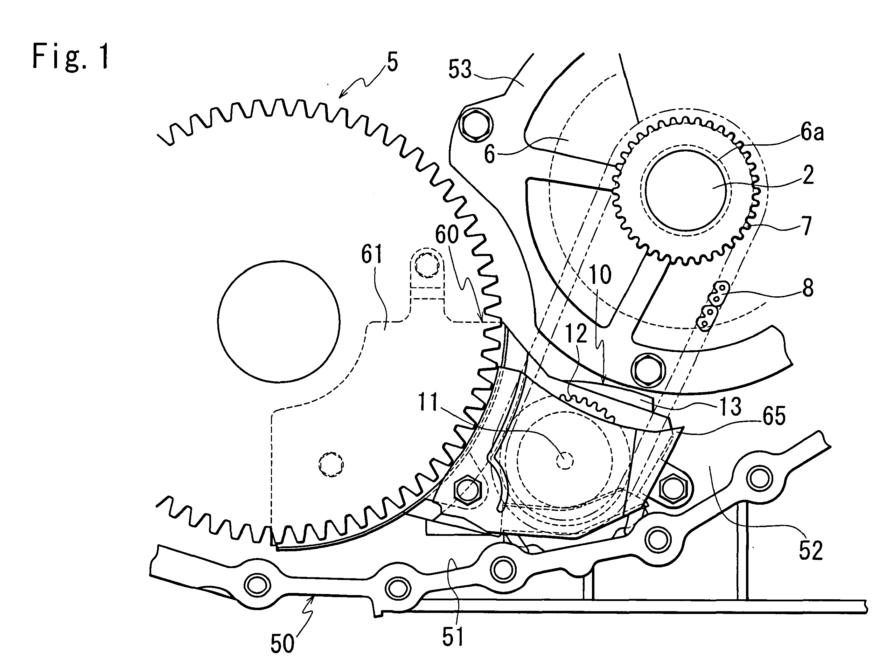

FIG. 1 is a front view showing a baffle plate according to an embodiment of the present invention.

Power from an engine, not shown, is transmitted to an input shaft (hereinafter referred to as a primary shaft) 2 of an automatic transmission through an after mentioned torque converter 6.

The power input to the primary shaft 2 is transmitted to a reduction gear, not shown, after engine revolutions are converted by a shift mechanism, not shown, comprised of a primary pulley provided on the primary shaft 2, a secondary pulley provided on a secondary shaft, and a V belt wound over the primary pulley and the secondary pulley. The reduction gear is engaged with a final gear 5 of a differential, so that power is transmitted from the reduction gear to the differential.

The power transmitted to the differential is transmitted to driving wheels of a vehicle, not shown, to drive the vehicle.

The primary shaft 2 and the torque converter 6 are arranged on the same axis.

An oil pump 10, which is driven by torque from a pump impeller 6a of the torque converter 6, is disposed such that an oil pump rotary shaft 11 and the primary shaft 2 are arranged in parallel with each other. The oil pump 10 is disposed in the vicinity of a case bottom wall 51 at the bottom of a transmission case 50 so as to draw oil stored in an oil pan, which is attached to a lower part of the transmission case 50, through an oil strainer.

The back of a pump main body 13 of the oil pump 10 as viewed in FIG. 1 is attached to a supporting wall 52 extended vertically from the case bottom wall 51 of the transmission case 50.

A driven sprocket 12 is attached to an end of the oil pump rotary shaft 11 on the front side as viewed in FIG. 1.

The rotating surfaces of the driven sprocket 12 and the final gear 5 are substantially in plane with each other.

A cover 53 that supports the primary shaft 2 is attached to the supporting wall 52. The torque converter 6 supported by the primary shaft 2 is disposed in front of the cover 53 as viewed in FIG. 1. The primary pulley supported by the primary shaft 2 is disposed at the back of the cover 53 as viewed in FIG. 1.

A drive sprocket 7 is attached to the pump impeller 6a of the torque converter 6. A chain 8 is extended over the drive sprocket 7 and the driven sprocket 12 attached to the oil pump rotary shaft 11 to drive the oil pump 10.

It should be noted that in the case bottom wall 51, a case hole is formed just below the oil pump 10, so that oil in the transmission case 50 flows into the oil pan attached to the lower part of the transmission case 50 through the case hole.

The oil pump 10 is connected to the oil strainer through an oil passage passing through the case hole formed in the case bottom wall 51.

A baffle plate base section 61 that encloses part of the side of the final gear 5 and the side of the driven sprocket 12 extends between the gap between the final gear 5 and the supporting wall 52 and the gap between the pump main body 13 and the driven sprocket 12.

A baffle plate cover section 65 that encloses all of the side of the driven sprocket 12 is disposed in front of the driven sprocket 12 as viewed in FIG. 1.

Thus, the baffle plate base section 61 and the baffle plate cover section 65 enclose both sides of the rotating surface of the driven sprocket 12.

The baffle plate base section 61 and the baffle plate cover section 65 constitute a baffle plate 60.

Since the baffle plate 60 encloses the final gear 5 and the driven sprocket 12, the amount of oil agitated when the final gear 5, driven sprocket 12, and chain 18 rotate can be reduced.

A detailed description will now be given of the baffle plate base section 61 and the baffle plate cover section 65, which constitute the baffle plate 60.

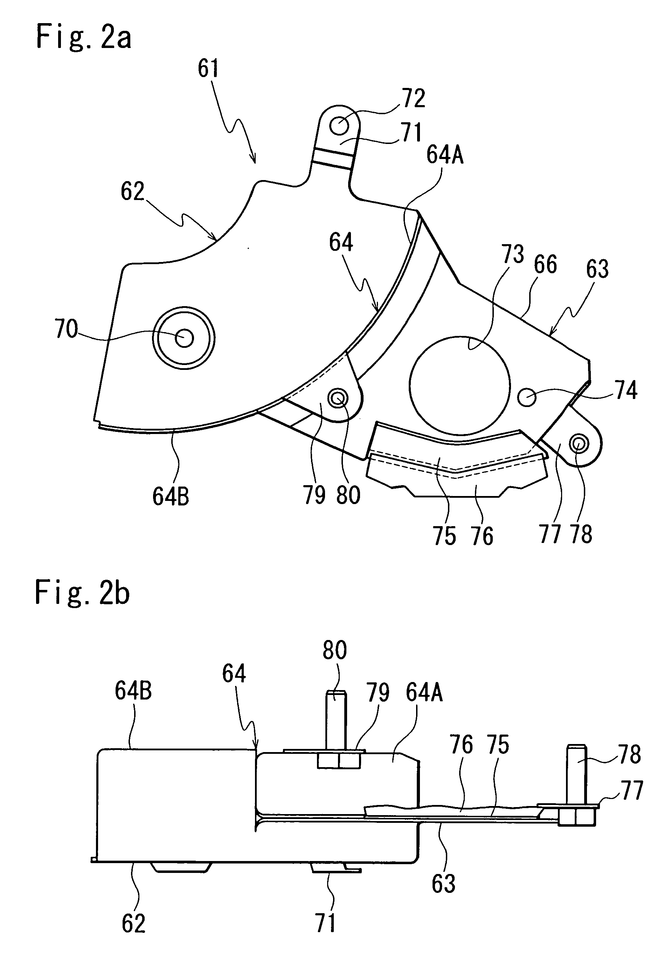

FIG. 2a is a front view showing the baffle plate base section 61, and FIG. 2b is a bottom view showing the baffle plate base section 61.

The baffle plate base section 61 is comprised of a final gear cover section 62 which encloses part of the side of the final gear 5 and a chain cover section 63 which encloses one side of the driven sprocket 12.

The surfaces of the final gear cover section 62 and the chain cover section 63 are offset relative to each other by bending as shown in FIG. 2b.

The final gear cover section 62 is formed like a fan which encloses about one-fourth of one side (surface parallel with the rotating surface of the final gear 5) of the final gear 5, which is closer to the oil pump 10.

A separation wall 64 raised toward the front side as viewed in FIG. 2a is formed at an edge of the outer diameter of the fan-like final gear cover section 62.

At a part of the fan-like outer diameter edge of the final gear cover section 62 which is connected to the chain cover section 63, the separation wall 64 is formed by welding an L-shaped cross-section separation wall member 64A curved along the fan-like outer diameter edge to the chain cover section 63. On the other hand, at a part of the fan-like outer diameter edge of the final gear cover section 62 which is not connected to the chain cover section 63, the separation wall 64 is formed of a separation wall member 64B formed by bending the fan-like outside edge of the final gear cover section 62.

The separation wall 64 comprised of the separation wall members 64A and 64B partitions the baffle plate base section 61 into the final gear 5 side and the driven sprocket 12 side.

A bolt hole 70 for fixing the baffle plate base section 61 to the supporting wall 52 by a bolt is formed in the final gear cover section 62, and a bolt hole 72 is formed in a protruded section 71 extending upward from the final gear cover section 62 as viewed in FIG. 2a.

A shaft hole 73 for inserting the oil pump rotary shaft 11 is formed in a plate main body 66 of the chain cover section 63.

A bolt hole 74 for fixing the chain cover section 63 to the pump main body 13 is formed on the right side of the shaft hole 73 as viewed in FIG. 2a.

A rubber attaching plate 75 to which a rubber plate 76 is attached by vulcanization is welded to the case bottom wall 51 side of the plate main body 66 of the chain cover section 63 (the lower side as viewed in FIG. 2b).

It should be noted that a side edge of the rubber plate 76 on the case bottom wall 51 side conforms to the shape of the inner peripheral surface of the case bottom wall 51. Also, the rubber plate 76 is inclined so that the an edge of the rubber plate 76 on the case bottom wall 51 side can be located above the junction of the rubber plate 76 and the rubber attaching plate 75 as viewed in FIG. 2b.

At an end of the separation wall member 64A on the separation wall member 64B side, a cover attaching protruded section 79 extends from an edge on the front side as viewed in FIG. 2a toward the chain cover section 63.

A bolt 80 extending upward as viewed in FIG. 2b is attached to the cover attaching protruded section 79.

A cover mounting protruded section 77 extends from the right end of the chain cover section 63 to the right side as viewed in FIG. 2a. A bolt 78 extending upward as viewed in FIG. 2b is attached to the cover attaching protruded section 77.

The baffle plate cover section 65 is attached to the baffle plate base section 61 via the bolts 78 and 80.

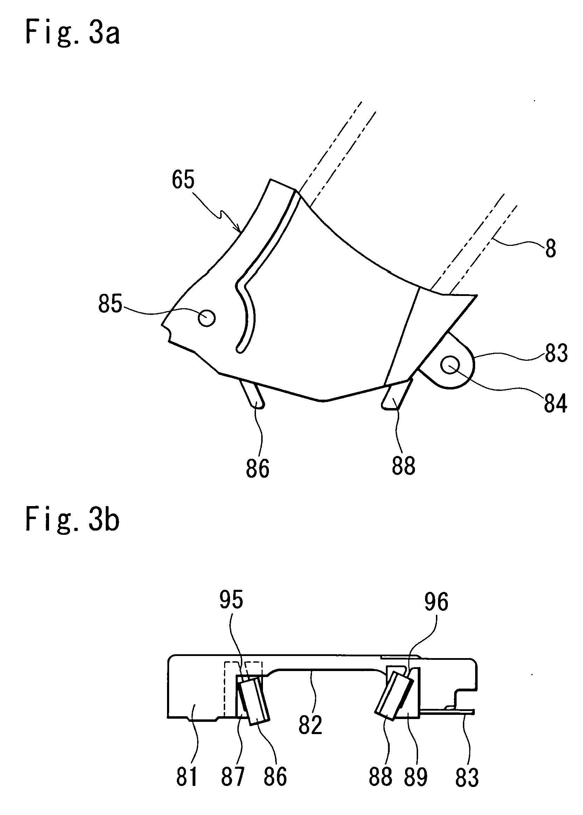

FIG. 3a is a front view showing the baffle plate cover section 65, and FIG. 3b is a bottom view showing the baffle plate cover section 65.

On a side of the baffle plate cover section 65 in proximity to the case bottom wall 51 (the lower side as viewed in FIG. 3a), a cover bottom wall 81 is formed by bending it toward the baffle plate base section 61 (toward the back as viewed in FIG. 3a).

The periphery of a part of the baffle plate cover section 65 which is closest to the case bottom wall 51 is cut out to form a cover cutout section 82.

A cover protruded section 83 extends rightward from the rear edge of the cover bottom wall 81 as viewed in FIG. 3a.

A mounting hole 84 into which the bolt 78 of the baffle plate base section 61 is to be inserted is formed in the cover protruded section 83.

A mounting hole 85 into which the bolt 80 of the baffle plate base section 61 is to be inserted is formed on the left side of the baffle plate cover section 65 as viewed in FIG. 3a.

A rubber insertion plate 87 into which a rubber plate 86 is inserted and a rubber insertion plate 89 into which a rubber plate 88 is inserted are welded to respective sides of the cover cutout section 82 (the right and left sides as viewed in FIG. 3b).

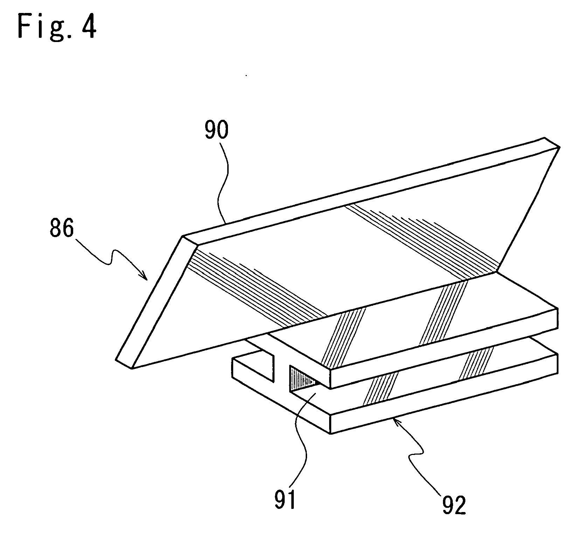

It should be noted that as shown in FIG. 4A, the rubber plate 86 is comprised of a plate section 90 and a main body 92, in which a groove 91 is formed in the direction of the length of the plate section 90.

The plate section 90 is formed to be longer than the main body 92, so that part of the plate section 90 is protruded from the main body 92.

The rubber plate 86 is held by inserting the groove 91 of the rubber plate 86 into a slit 95 formed in the rubber insertion plate 87 from the side on which the plate section 90 is protruded.

The rubber insertion plate 87 into which the rubber plate 86 is inserted is welded to the cover bottom wall 81 from the inside of the baffle plate cover section 65 in a manner being overlapped on the cover bottom wall 81 with the opening side of the slit 95 directed to the cut-out edge of the cover cutout section 82.

This prevents the rubber plate 86 from falling off.

Similarly, the rubber plate 88 is inserted into a slit 96 formed in the rubber insertion plate 89, so that the rubber insertion plate 89 is welded to the cover bottom wall 81 from the outer side of the baffle plate cover section 65 in a manner being overlapped on the cover bottom wall 81.

The baffle plate 60 is attached to the supporting wall 52 such that ends of the rubber plates 86 and 88 extending downward from the baffle plate cover section 65 as viewed in FIG. 3a are in contact with the case bottom wall 51.

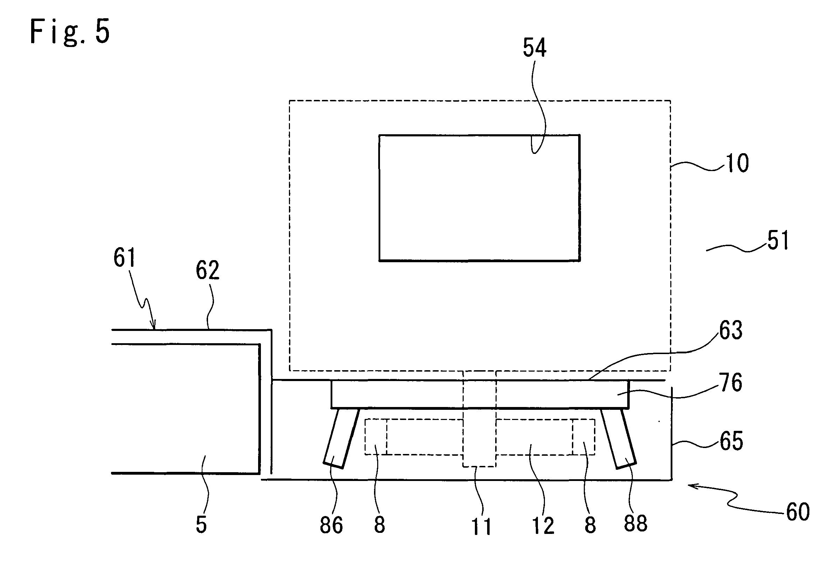

FIG. 5 is a diagram schematically showing the arrangement of the baffle plate 60 in the case where the oil pump 10 and its vicinity are viewed from above.

The case bottom wall 51 below the oil pump 10 (at the back as viewed in FIG. 5) is provided with a case hole 54 through which oil in the transmission case 50 flows into the oil pan.

Other than in a space through which the chain 8 is passed (toward substantially the front side as viewed in FIG. 5), the driven sprocket 12 attached to the oil pump rotary shaft 11 of the oil pump 10 is enclosed by the chain cover section 63, baffle plate cover section 65, and case bottom wall 51.

The rubber plate 76 attached to the chain cover section 63 is brought into abutment with the case bottom wall 51, and the rubber plate 86, 88 attached to the baffle plate cover section 65 is brought into abutment with the case bottom wall 51. As a result, oil in the space enclosed by the chain cover section 63 and the baffle plate cover section 65 can be prevented from flowing directly into the case hole 54.

Also, the oil pump 10 side of the final gear 5 is enclosed by the final gear cover section 62 to prevent oil in the vicinity of the final gear 5 from flowing directly into the case hole 54.

According to the present embodiment arranged as described above, the rubber plates 76, 86, and 88 are arranged on the side of the baffle plate 60 in proximity to the case bottom wall 51. As a result, even in the case where the inner peripheral surface of the case bottom wall 51 of the transmission case 50 has a complex shape, the side of the baffle plate 60 in proximity to the case bottom wall 51 can be closely attached to the inner peripheral surface of the case bottom wall 51.

Therefore, oil agitating resistance during rotation of the driven sprocket 12 can be reduced, and the baffle plate 60 can be easily designed and manufactured.

Also, since the amount of oil agitated is reduced, the oil that remains in an upper part of the transmission case due to bubbling and extra splashing can be reduced.

Therefore, a certain amount of oil to be returned to the oil pan can be maintained.

As a result, it is possible to prevent the oil level from lowering, thereby preventing the oil strainer from drawing the air.

Also, since the rubber plates 76, 86, and 88 are closely attached to the case bottom wall 51 below the driven sprocket 12 as the rotating body, the flow of oil containing air bubbles formed by rotation of the driven sprocket 12 can be blocked.

Further, since the baffle plate 60 is disposed between the driven sprocket 12 as well as the final gear 5 and the case hole 54 into which oil flows, oil containing air bubbles formed as a result of agitation by the final gear 5 and the driven sprocket 12 can be prevented from flowing directly into the case hole 54. Therefore, it is possible to prevent the oil pump 10 from drawing oil containing air bubbles through the oil strainer.

Alternatively, since both sides of the rotating surface of the driven sprocket 12 are enclosed by the baffle plate base section 61 and the baffle plate cover section 65, oil agitating resistance resulting from the rotation of the driven sprocket 12 and the chain 8 can be reduced.

Also, the rubber plate 76, 86, and 88 are used for closely attaching the case bottom wall 51 and the baffle plate 60 to each other, the rubber plate 76, 86, and 88 can be easily machined in accordance with the shape of the inner peripheral surface of the case bottom wall 51.

Therefore, airtightness can be improved, and the case bottom wall 51 and the baffle plate 60 can be closely attached to each other via an inexpensive material.

Although in the present embodiment, the rubber plates 76, 86, and 88 are used for closely attaching the case bottom wall 51 and the baffle plate 60 to each other, the present invention is not limited to this, but other elastically deformable or plastically deformable members may be used. In this case as well, the same effects as those described above can be obtained.

Further, although in the present embodiment, the final gear, driven sprocket, and chain are enclosed by the baffle plate, the present invention is not limited to this, but other rotating bodies may be enclosed by the baffle plate, and also, the number of rotating bodies to be enclosed by the baffle plate is not limited.

## Claims

1. A baffle plate that encloses at least part of a rotating body 5, 8, 12 immersed in an oil in an automatic transmission, comprising:
a plate main body 66, 75 partially in proximity to an inner wall of a transmission case 50 of the automatic transmission; and
a sealing member 76, 86, 88 that is provided at a part of said plate main body in proximity to the inner wall of the transmission case and comprises either an elastically deformable member or a plastically deformable member,
wherein said sealing member is elastically or plastically deformed and can be closely attached to the inner wall of the transmission case.

2. A baffle plate according to claim 1, wherein said sealing member can be closely attached to the inner wall of the transmission case below the rotating body.

3. A baffle plate according to claim 1 or 2, wherein the baffle plate can be disposed between the rotating body and an inlet of an oil strainer in the automatic transmission.

4. A baffle plate according to any of claims 1 to 3, wherein the baffle plate encloses at least both sides of the rotating body in a direction of rotary shafts of the rotating body.

5. A baffle plate according to any of claims 1 to 4, said sealing member is made of rubber.

6. A baffle plate comprising a main body and a deformable sealing member.

7. The baffle plate wherein the sealing member is elastically or plastically deformable.
